# EUROPÄISCHE PATENTANMELDUNG

(11) **EP 1 127 784 A1**
(43) Veröffentlichungstag der Anmeldung: **29.08.2001**
(21) Anmeldenummer: 01103805.6
(22) Anmeldetag: 16.02.2001
(51) Int. Cl.: B63B 25/28, B60P 7/13, F16G 11/12

(54) **Vorrichtung zum Verzurren von Gegenständen, insbesondere an Bord von Schiffen**

(30) Priorität: 22.02.2000 DE 10008098
(71) Anmelder: MacGregor-Conver GmbH, 28307 Bremen (DE)
(72) Erfinder: Gloystein, Jürgen, 28355 Bremen (DE)
(74) Vertreter: Möller, Friedrich, Dipl.-Ing.

(57) **Zusammenfassung**

Vorrichtungen zum Verzurren von Gegenständen, insbesondere an Bord von Schiffen, verfügen über eine Spanneinrichtung (10) und ein damit unter Zugspannung setzbares Zugorgan, beispielsweise eine Kette (11). Bekannte Spanneinrichtungen (10) verfügen über ein von einer Gewindespindel (16) auf- und abbewegbares Einhakteil (13), das einen seitlich vorstehenden Anlagevorsprung (14) zum Einhängen der Kette (11) aufweist. Durch die Zugspannung der Kette (11) wird das Einhakteil (13) im kippenden Sinne belastet, wodurch auf die Gewindespindel (16) eine Biegebeanspruchung ausgeübt wird, die zu einer Verbiegung der Gewindespindel (16) führen kann.

Die Erfindung sieht eine Spanneinrichtung (10) vor, bei der das Einhakteil (13) frei bewegbar auf der Gewindespindel (16) gelagert ist, wodurch eine von der Kette (11) hervorgerufene Verkippung des Einhakteils (13) zu keiner Biegebeanspruchung der Gewindespindel (16) führt.

## Beschreibung

Die Erfindung betrifft eine Vorrichtung zum Verzurren von Gegenständen, insbesondere an Bord von Schiffen, gemäß dem Oberbegriff des Anspruchs 1.

Vorrichtungen der hier angesprochenen Art dienen überwiegend dazu, Gegenstände während des Transports gegen Verrutschen zu sichern. Vor allem an Bord von Schiffen muss die Ladung zuverlässig gesichert werden, damit sie infolge der durch Seegang hervorgerufenen Schiffsbewegungen nicht verrutscht. Das gilt insbesondere für Container.

Die Vorrichtung setzt sich im wesentlichen zusammen aus mindestens einem Zugorgan und einer Spanneinrichtung. Beim Zugorgan kann es sich jeweils um eine Kette, ein Seil oder auch eine Stange (Zurrstange) handeln. Das Spannorgan dient dazu, das oder jedes Zugorgan der Vorrichtung auf Spannung zu bringen und diese Spannung während des Transports der verzurrten Gegenstände zuverlässig aufrecht zu erhalten. Die Anordnung der Spanneinrichtung kann je nach Art der Verzurrung des zu verzurrenden Gegenstands unterschiedlich sein. Beispielsweise kann die Spanneinrichtung zwischen zwei zueinandergerichteten Enden zweier Zugorgane angeordnet sein. Die außenliegenden Enden der Zugorgane sind dann einerseits am zu verzurrenden Gegenstand und andererseits an einer entsprechenden Stelle des Fahrzeugs, insbesondere des Schiffs, befestigt. Bei der Vorrichtung mit nur einem Zugorgan befindet sich dieses zwischen der Spanneinrichtung und dem zu verzurrenden Gegenstand oder dem Fahrzeug. Die Spanneinrichtung ist dann direkt mit dem zu verzurrenden Gegenstand oder einem festen Laschpunkt des Fahrzeugs bzw. des Schiffs verbunden.

Aus der DE 30 50 557 C2 ist eine Vorrichtung zum Verzurren von Containern auf Schiffsdecks bekannt, bei der die Spanneinrichtung ein Einhakteil für das Zugorgan aufweist, das als Spindelmutter auf einer drehbaren Gewindespindel gelagert ist. Die Gewindespindel ist drehbar in einem Verbindungsteil der Spanneinrichtung angeordnet. Beim Verdrehen der Gewindespindel wird das Einhakteil unmittelbar in Längsrichtung der Gewindespindel bewegt zum Spannen und Entspannen des Zugorgans. Das Einhakteil verfügt über einen gegenüber der Gewindespindel seitlich vorstehenden Anlagevorsprung, in den ein Ende des Zugorgans einhängbar ist. Bei gespannter Vorrichtung übt das Zugorgan auf den seitlich gegenüber der Gewindespindel vorstehenden Anlagevorsprung eine Zugkraft auf, die dazu führt, dass das Einhakteil auf der Gewindespindel im verkippenden Sinne belastet wird. Die Gewindespindel wird dadurch sowohl mit Längskräften als auch mit Querkräften beaufschlagt. Letztereführen zu einer Biegebelastung der Gewindespindel. Die Folge ist, dass hohe Belastungen, insbesondere ruckartige Belastungen der zu verzurrenden Gegenstände bei starkem Seegang, die Spanneinrichtung, und zwar die Gewindespindel, verbiegt. Die Spanneinrichtung wird dann unbrauchbar. Sie lässt insbesondere ein Lösen der Verzurrung dann nicht mehr zu.

Hiervon ausgehend liegt der Erfindung die Aufgabe zugrunde, eine Vorrichtung zum Verzurren von Gegenständen insbesondere an Bord von Schiffen zu schaffen, die auch bei hohen Belastungen ihre Funktionstüchtigkeit beibehält, vorzugsweise die Gefahr eines Verbiegens der Gewindestange der Spanneinrichtung nicht besteht.

Eine Vorrichtung zur Lösung dieser Aufgabe weist die Merkmale des Anspruchs 1 auf. Dadurch, dass das Einhakteil frei beweglich auf der Gewindespindel gelagert ist, werden vom Zugorgan in das Einhakteil eingeleitete Kippkräfte nicht auf die Gewindespindel übertragen. Dadurch, dass weiterhin mindestens einer Stirnseite des Einhakteils eine auf der Gewindespindel gelagerte Spindelmutter zugeordnet ist, kann sich das Einhakteil gegen die vom Zugorgan in die Spanneinrichtung eingeleitete Zurrkraft an der Gewindespindel abstützen, und zwar nur in Längsrichtung der Gewindespindel. Dadurch wird sichergestellt, dass nur Längskräfte in die Gewindespindel eingeleitet werden, wodurch diese nur auf Druck bzw. Zug belastet wird; nicht aber auf Biegung. Eine Verformung, insbesondere eine dauerhafte Verformung der Gewindespindel durch hohe Belastungen des Zugorgans ist dadurch nicht möglich.

Vorzugsweise ist jeder der gegenüberliegenden Stirnseiten des Einhakteils eine eigene Spindelmutter zugeordnet. Die Spindelmuttern weisen in der Regel einen Abstand zueinander auf, der etwas größer ist als der Abstand der gegenüberliegenden Stirnseiten des Einhakteils, so dass dieses von den Spindelmuttern in gegenüberliegenden Richtungen auf der Gewindestange verschoben werden kann, aber gleichwohl noch zwischen den Stirnseiten des Einhakteils und den Spindelmuttern ein so großes Spiel vorhanden ist, dass das Einhakteil frei gegenüber der Gewindespindel verkippbar ist.

Gemäß einer bevorzugten Ausgestaltung der Erfindung stützt sich das Einhakteil gegen Verkippen gegenüber der Längsmittelachse der Gewindespindel am oder im Verbindungsteil ab. Ein vom Zugorgan auf das Einhakteil ausgeübtes Kippmoment wird demnach vom Verbindungsteil aufgenommen und nicht von der Gewindespindel. Das Verbindungsteil kann dazu entsprechend ausgebildet sein, so dass dieses sich durch den Kippmoment beim Verkippen des Einhakteils nicht verformt und den Kippwinkel des Einhakteils derart begrenzt, dass die freie Verschiebbarkeit desselben auf der Gewindespindel erhalten bleibt und diese beim Verkippen des Einhakteils somit nicht auf Biegung belastet wird.

Die Abstützung des Einhakteils im Verbindungsteil kann dadurch erfolgen, dass letzteres hülsenartig ausgebildet ist und ein auf der Gewindespindel verschieblicher Hülsenabschnitt des Einhakteils größtenteils umgibt. Das Einhakteil kann aber auch mit vorstehend angeordneten Stegen versehen sein, die in entsprechenden Vertiefungen bzw. Nuten des Verbindungsteils geführt sind und dadurch die Verkippung des Einhakteils gegenüber der Gewindespindel begrenzen. Schließlich ist es auch denkbar, dass Einhakteil außen am Verbindungsteil zu lagern, wodurch das Einhakteil eine das Verbindungsteil umgehende Führungshülse bzw. einen Außenring aufweist. Das Einhakteil ist dann außen am Verbindungsteil, was in diesem Falle nicht unbedingt hülsenartig ausgebildet sein muss, geführt, wodurch es auch zu einer Begrenzung der Verkippbarkeit des Einhakteils gegenüber der Gewindespindel kommt.

Beim bevorzugten Ausführungsbeispiel der Erfindung weist der Hülsenabschnitt des Einhakteils eine Durchgangsbohrung auf, die zum frei verschiebbaren Durchtritt der Gewindespindel dient. Durch entsprechende Bemessung der Durchgangsbohrung ist der Hülsenabschnitt des Einhakteils so weit gegenüber der Gewindespindel verkippbar, dass diese sich nicht am Hülsenabschnitt abstützt, bevor eine Begrenzung der Verkippung des Einhakteils durch das Verbindungsteil erfolgt. Vorzugsweise verfügt die Durchgangsbohrung des Hülsenabschnitts über von der Mitte desselben ausgehende und sich zu den gegenüberliegenden Stirnseiten erstreckende, vorzugsweise kegelartige Erweiterungen. Dadurch wird ohne ein unnötig großes quergerichtetes Spiel des Hülsenabschnitts auf der Gewindestange eine ausreichende freie Verkippbarkeit des Einhakteils gegenüber der Gewindestange erreicht, weil dabei eine Verkippung des Hülsenabschnitts um den mittleren Längenbereich der Durchgangsbohrung erfolgt und somit die zu den gegenüberliegenden Stirnseiten zunehmende Verkippung des Hülsenabschnitts durch die kegelartigen Erweiterungen der Durchgangsbohrungen ermöglicht wird.

Es ist weiterhin vorgesehen, die gegenüberliegenden Stirnseiten insbesondere des Hülsenabschnitts des Einhakteils umlaufend gewölbt auszubilden, und zwar insbesondere kugelkarlottenartig. In Verbindung mit einer korrespondierenden Ausbildung der den Stirnseiten des Hülsenabschnitts zugerichteten Stirnseiten der Spindelmuttern kann sich das Einhakteil mit dem Hülsenabschnitt auch im gegen eine entsprechende Spindelmutter abstützenden Zustand verkippen, ohne dass dadurch infolge der Anlage des Hülsenabschnitts an der entsprechenden Spindelmutter Biegekräfte in die Gewindespindel eingeleitet werden, weil bei einer Verkippung des Einhakteils die aneinander anliegenden, korrespondierenden kugelkarlottenartigen Stirnseiten des Hülsenabschnitts des Einhakteils und der entsprechenden Spindelmutter aneinander entlanggleiten können.

Weitere Unteransprüche betreffen bevorzugte Weiterbildungen der Vorrichtung.

Ein Ausführungsbeispiel der erfindungsgemäßen Vorrichtung wird nachfolgend anhand der Zeichnung näher erläutert. In dieser zeigen:
- Fig. 1: die Vorrichtung in einer Seitenansicht,
- Fig. 2: die Spanneinrichtung der Vorrichtung in der Fig. 1 in einer um 90° gedrehten Seitenansicht,
- Fig. 3: einen vergrößert dargestellten Längsschnitt durch die Spanneinrichtung der Fig. 5 im Bereich eines Einhakteils, und
- Fig. 4: einen Schnitt IV-IV durch die Spanneinrichtung der Fig. 3.

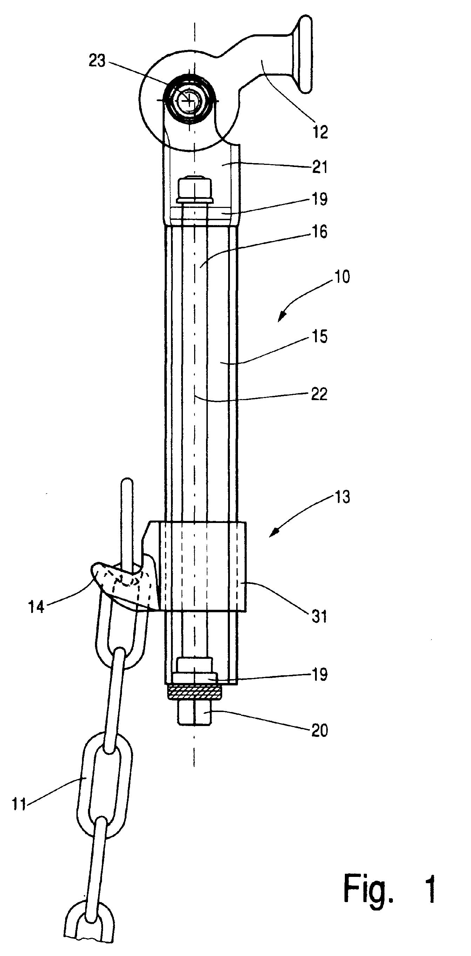

Die hier gezeigte Vorrichtung dient zum Verzurren von Containern an Bord von Schiffen. Die Vorrichtung verfügt über eine Spanneinrichtung 10 und ein Zugorgan, das im gezeigten Ausführungsbeispiel als eine Kette 11 ausgebildet ist. Die Spanneinrichtung 10 ist am oberen Ende mit einem Einhakbeschlag 12 versehen, der zum Einhängen in ein Langloch eines Eckbeschlags eines nicht gezeigten Containers ausgebildet ist. Damit ist die Spanneinrichtung 10 an ihrem oberen Ende mit dem zu verzurrenden Container verbunden. Die Spanneinrichtung 10 verfügt über ein Einhakteil 13, das mit einem Anlagevorsprung 14 zum Einhängen eines Kettenglieds eines Endbereichs der Kette 11 versehen ist (Fig. 1). Ein nicht gezeigtes gegenüberliegendes, unteres Ende der Kette 11 ist mit einer festen Zurrstelle an Bord des Schiffs verbunden. Dazu kann das betreffende Ende der Kette 11 einen nicht gezeigten Haken aufweisen, der in ein schiffsseitiges Zurrauge einhängbar ist.

Die in erfindungsgemäß besonderer Weise ausgebildete Spanneinrichtung 10 verfügt über ein längliches, hülsenartig ausgebildetes Verbindungsteil 15, eine darin drehbar gelagerte Gewindespindel 16, das bereits erwähnte Einhakteil 13 und zwei Spindelmuttern 17 und 18.

Die im hülsenartigen Verbindungsteil 15 angeordnete Gewindespindel 16 ist mit entgegengesetzten Endbereichen drehbar in quergerichteten Lagertraversen 19 an entgegengesetzten Enden des Verbindungsteils 15 gelagert. Aus dem unteren Ende des Verbindungsteils 15 ragt die Gewindespindel 16 mit einem Betätigungsvierkant 20 heraus. Der Betätigungsvierkant 20 dient zum Aufsetzen eines nicht gezeigten Werkzeugs, mit dem die Gewindespindel 16 zum Betätigen der Spanneinrichtung 10 vorzugsweise von Hand verdrehbar ist. Oberhalb der oberen Lagertraverse 19 ist das Verbindungsteil 15 mit einem Gabelende 21 versehen, an dem um eine quer zur Längsmittelachse 22 der Spanneinrichtung 10, insbesondere der Gewindespindel 16, verlaufende Schwenkachse 23 der Einhakbeschlag 12 verdrehbar am Verbindungsteil 15 befestigt ist (Fig. 1).

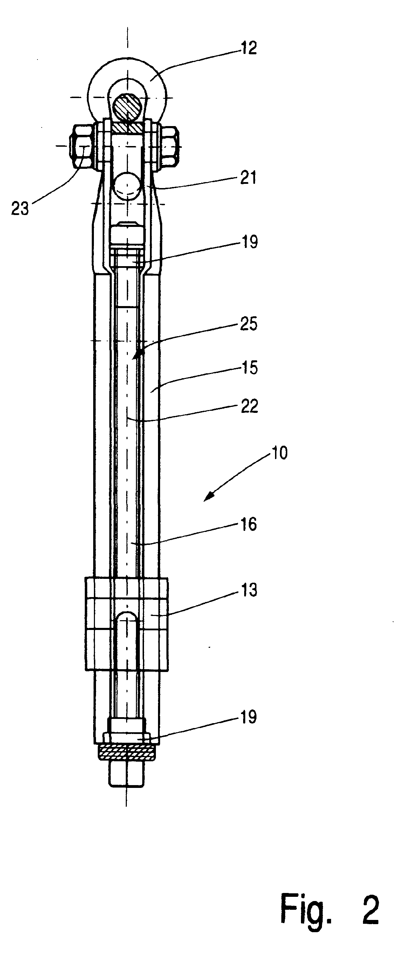

Das Einhakteil 13 besteht neben dem eingangs erwähnten Anlagevorsprung 14 aus einem Hülsenabschnitt 24. Der Hülsenabschnitt 24 und der Anlagevorsprung 14 sind einstückig miteinander verbunden. Das Einhakteil 13 mit dem Hülsenabschnitt 24 ist frei verschieblich auf der Gewindespindel 16 gelagert. Dabei befindet sich der Hülsenabschnitt 24 innerhalb des Verbindungsteils 15. Durch einen Längsschlitz 25 im hülsenartigen Verbindungsteil 15 ist das Einhakteil 13 mit dem gegenüber dem Hülsenabschnitt 24 vorstehenden Anlagevorsprung 14 aus dem Verbindungsteil 15 herausgeführt (Fig. 2).

Der Hülsenabschnitt 24 des Einhakteils 13 verfügt über eine konzentrisch zur Längsmittelachse 22 der Gewindespindel 16 verlaufende Durchgangsbohrung 26. Die Durchgangsbohrung 26 ist ausgehend von einem schmalen mittleren Zylinderbereich 27, der größer bemessen ist als der Flankendurchmesser der Gewindespindel 16 zu gegenüberliegenden Stirnseiten 28 des Hülsenabschnitts 24, erweitert. Die Erweiterungen sind im gezeigten Ausführungsbeispiel durch Kegelabschnitte 29 und 30 gebildet, die sich zu den Stirnseiten 28 hin vergrößern. Dadurch ist der Hülsenabschnitt 24 des Anlagevorsprungs 14 nicht nur längs zur Gewindespindel 16 verschiebbar; der Hülsenabschnitt 24 des Anlagevorsprungs 14 ist auch auf der Gewindespindel 16 frei verkippbar, derart, dass die Längsmittelachse der Durchgangsbohrung 26 einen spitzen Winkel zur Längsmittelachse 22 der Gewindespindel 16 einnehmen kann.

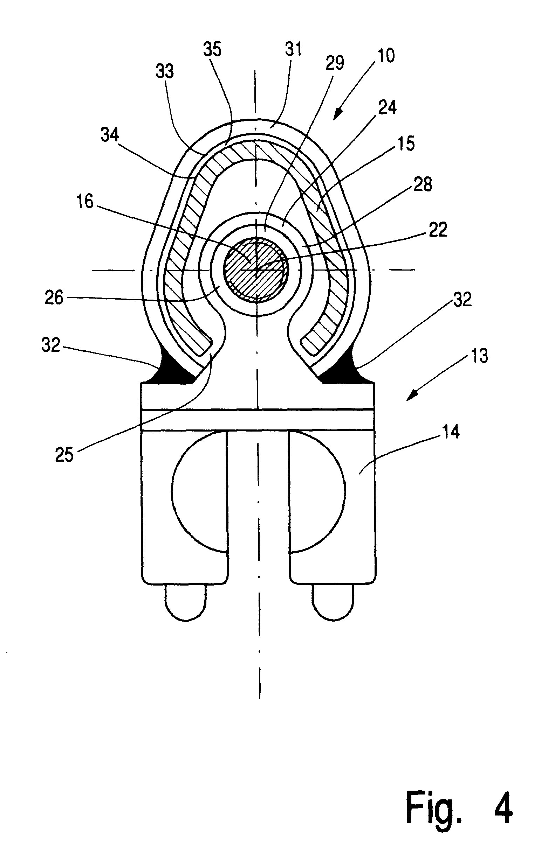

Der Anlagevorsprung 14 verfügt des weiteren über einen Außenring 31, der das hülsenartige Verbindungsteil 15 von außen umgibt (Fig. 4). Der Außenring 31 verfügt etwa über die Höhe des Anlagevorsprungs 14 und ist an gegenüberliegenden Enden fest mit dem Anlagevorsprung 14 verbunden, nämlich verschweißt durch entsprechende Schweißnähte 32. Der Außenring 31 ist innenseitig korrespondierend zum äußeren Querschnitt des hülsenartigen Verbindungsteils 15 ausgebildet, wobei zwischen der Innenwandung 33 des Außenrings 31 und der Außenwandung 34 des Verbindungsteils 15 ein schmaler, umlaufender Spalt 35 mit in etwa ringsherum gleicher Breite entsteht. Aufgrund dieses Spalts 35 ist das Einhakteil 13 mit dem Außenring 31 auf dem Verbindungsteil 15 in Längsrichtung derselben verschiebbar. Der Spalt 35 zwischen dem Außenring 31 und dem Verbindungsteil 15 der Spanneinrichtung 10 ist des weiteren derart bemessen, dass bei einem Verkippen des Einhakteils 13 gegenüber dem Verbindungsteil 15 sich das Einhakteil 13 mit dem Außenring 31 am Verbindungsteil 15 abstützt, bevor die Durchgangsbohrung 26 im Hülsenabschnitt 24 des Einhakteils 13 zur Anlage an der Gewindespindel 16 kommt und bevor die Außenseite des Hülsenabschnitts 24 innen am hülsenartigen Verbindungsteil 15 anliegt (Fig. 4).

Durch die vorstehend beschriebene Ausbildung des Einhakteils 13 einerseits und des Verbindungsteils 15 andererseits wird erreicht, dass bei von der Spanneinrichtung 10 gespannter Kette 11 die von derselben auf den seitlich vorstehenden Anlagevorsprung 14 ausgeübte Kraft das Einhakteil 13 nur bis zur Anlage des Außenrings 31 am Verbindungsteil 15 gegenüber der Längsmittelachse 22 der Spanneinrichtung 10 verkippen kann. Durch die freie Verschiebbarkeit des Hülsenabschnitts 24 des Einhakteils 13 auf der Gewindespindel 16, insbesondere die sich nach außen erweiternde Durchgangsbohrung 26, wird erreicht, dass infolge der durch den Außenring 31 des Einhakteils 13 begrenzende Verschwenkbarkeit derselben keine quer zur Längsmittelachse 22 der Spanneinrichtung 10 gerichtete Kraft in die Gewindespindel 16 eingeleitet werden kann, wodurch diese durch das Einhakteil 13 nicht auf Biegung, sondern nur auf Druck in Richtung der Längsmittelachse 22 belastet wird.

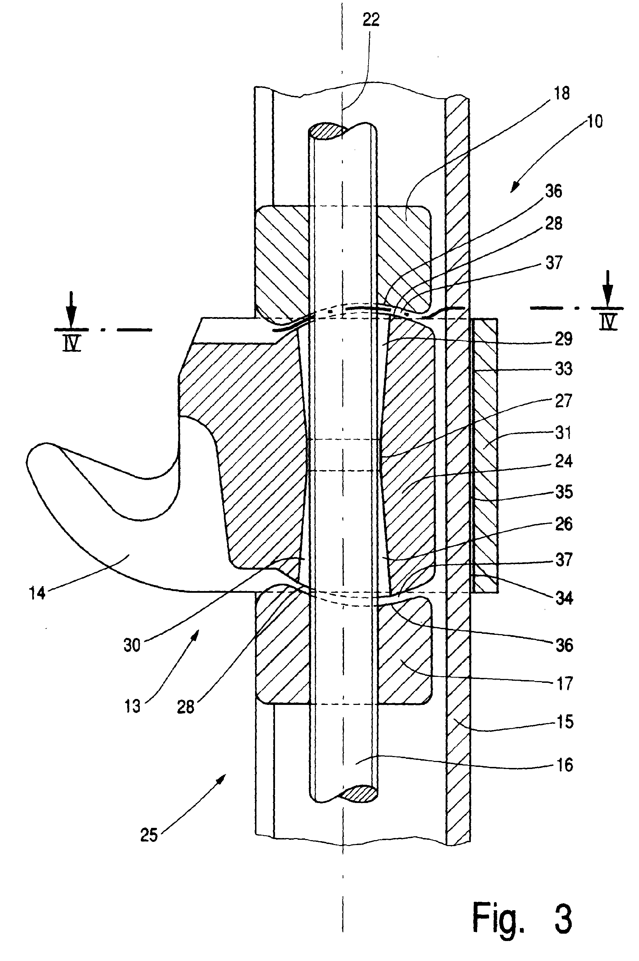

Durch die gegenüberliegenden Stirnseiten 28 des Hülsenabschnitts 24 des Einhakteils 13 zugeordneten Spindelmuttern 17 und 18 wird das an sich frei verschiebbar auf der Gewindespindel 16 gelagerten Einhakteils 13 in Längsrichtung der Gewindespindel 16 gehalten (Fig. 3). Beim Verdrehen der Gewindespindel 16 um ihre Längsmittelachse 22 werden die Spindelmuttern 17 und 18 gleichermaßen auf der Gewindespindel 16 auf- und abbewegt. Dabei nehmen die den gegenüberliegenden Stirnseiten 28 des Hülsenabschnitts 24 des Einhakteils 13 zugeordneten Spindelmuttern 17 und 18 das Einhakteil 13 in Längsrichtung der Gewindespindel 16 mit, wodurch mit der Spanneinrichtung 10 die Kette 11 gespannt bzw. entspannt werden kann.

Die Spindelmuttern 17 und 18 sind mit einem solchen Abstand auf der Gewindespindel 16 angeordnet, dass zwischen den gegenüberliegenden Stirnseiten 28 des Hülsenabschnitts 24 des Einhakteils 13 und den zu dem Hülsenabschnitt 24 weisenden Stirnseiten 36 der Spindelmuttern 17 und 18 jeweils ein kleiner Zwischenraum 37 verbleibt. Die gegenüberliegenden Stirnseiten 28 des Hülsenabschnitts 24 zugeordneten Zwischenräume 37 verhindern ein Festklemmen des Hülsenabschnitts 24 zwischen den Spindelmuttern 17 und 18 und gewährleisten eine freie Bewegbarkeit, insbesondere eine freie Verkippung, des Hülsenabschnitts 24 und somit des gesamten Einhakteils 13 zwischen den gegenüberliegenden Spindelmuttern 17 und 18 auf der Gewindespindel 16.

Die gegenüberliegenden Stirnseiten 28 des Hülsenabschnitts 24 sind erhaben ausgebildet, und zwar umlaufend gewölbt. Dadurch verfügen die Stirnseiten 28 über eine kugelkarlottenartige Gestalt. Hierzu korrespondierend sind die Stirnseiten 36 der Spindelmuttern 17 und 18 ausgebildet, nämlich kugelkarlottenartig einwärts gewölbt. Der Radius der kugelkarlottenartig gewölbten Stirnseiten 28 und 36 entspricht etwa der halben Höhe des Hülsenabschnitts 24, wodurch beim Verkippen des Einhakteils 13 die Stirnseiten 28 und 36 aneinander entlanggleiten können, ohne dass sich dadurch der Abstand des Hülsenabschnitts 24 des Einhakteils 13 gegenüber der betreffenden Spindelmutter 18 bzw. 17 ändert.

Durch die beschriebene Gestaltung der Stirnseiten 28 des Hülsenabschnitts 24 und der Stirnseiten 36 der Spindelmuttern 17 und 18 können diese beim Verkippen des Einhakteils 13 aneinander entlanggleiten, wodurch auch bei großen Anlagekräften beispielsweise der unteren Stirnseite 28 des Hülsenabschnitts 24 an der oberen Stirnseite 36 der unteren Spindelmutter 18 das Einhakteil 13 bis zur Begrenzung durch den Außenring 31 am Verbindungsteil 15 verkippen kann, ohne dass dabei vom Einhakteil 13 quergerichtete Kräfte in die Gewindespindel 16 eingeleitet werden können.

### Bezugszeichenliste :

- 10: Spanneinrichtung
- 11: Kette
- 12: Einhakbeschlag
- 13: Einhakteil
- 14: Anlagevorsprung
- 15: Verbindungsteil
- 16: Gewindespindel
- 17: Spindelmutter
- 18: Spindelmutter
- 19: Lagertraverse
- 20: Betätigungsvierkant
- 21: Gabelende
- 22: Längsmittelachse
- 23: Schwenkachse
- 24: Hülsenabschnitt
- 25: Längsschlitz
- 26: Durchgangsbohrung
- 27: Zylinderbereich
- 28: Stirnseite
- 29: Kegelabschnitt
- 30: Kegelabschnitt
- 31: Außenring
- 32: Schweißnaht
- 33: Innenwandung
- 34: Aussenwandung
- 35: Spalt
- 36: Stirnseite
- 37: Zwischenraum

## Patentansprüche

1. Vorrichtung zum Verzurren von Gegenständen, insbesondere an Bord von Schiffen, mit mindestens einem Zugorgan und einer Spanneinrichtung, wobei die Spanneinrichtung ein längliches Verbindungsteil, eine sich durch das Verbindungsteil erstreckende Gewindespindel und ein auf der Gewindespindel gelagertes Einhakteil für das Zugorgan aufweist, **dadurch gekennzeichnet,** dass das Einhakteil (13) frei beweglich auf der Gewindespindel (16) gelagert ist und mindestens einer Stirnseite (28) des Einhakteils (13) eine auf der Gewindespindel (16) gelagerte Spindelmutter (17, 18) zugeordnet ist, die das Einhakteil (13) gegen die Zurrkraft des Zugorgans in Längsrichtung der Gewindespindel (16) hält.

2. Vorrichtung nach Anspruch 1, **dadurch gekennzeichnet,** dass gegenüberliegenden Stirnseiten (28) des Einhakteils (13) jeweils eine Spindelmutter (17, 18) zugeordnet ist, wobei vorzugsweise die Spindelmuttern (17, 18) mit einem Abstand auf der Gewindespindel (16) angeordnet sind, der etwas größer ist als der Abstand der gegenüberliegenden Stirnseiten (28) des Einhakteils (13).

3. Vorrichtung nach einem der vorhergehenden Ansprüche, **dadurch gekennzeichnet,** dass das Einhakteil (13) sich gegen Verkippen gegenüber einer Längsmittelachse (22) der Gewindespindel (16) an dem Verbindungsteil (15) abstützt.

4. Vorrichtung nach einem der vorhergehenden Ansprüche, **dadurch gekennzeichnet,** dass das Verbindungsteil (15) hülsenartig ausgebildet ist, und vorzugsweise das Einhakteil (13) im hülsenartigen Verbindungsteil (15) längs zur Gewindespindel (16) frei verschiebbar ist.

5. Vorrichtung nach einem der vorhergehenden Ansprüche, **dadurch gekennzeichnet,** dass das hülsenartige Verbindungsteil (15) das Einhakteil (13) größtenteils umgibt, insbesondere einen im Verbindungsteil (15) angeordneten Hülsenabschnitt (24) des Einhakteils (13).

6. Vorrichtung nach einem der vorhergehenden Ansprüche, **dadurch gekennzeichnet,** dass das Einhakteil (13) mit einem Anlagevorsprung (14) für das Zugorgan seitlich aus einem Längsschlitz (25) des hülsenartigen Verbindungsteils (15) herausragt.

7. Vorrichtung nach einem der vorhergehenden Ansprüche, **dadurch gekennzeichnet,** dass das Einhakteil (13) eine das Verbindungsteil (15) umgebende Führungshülse, insbesondere einen Außenring (31), aufweist, und vorzugsweise die Führungshülse bzw. der Außenring (31) fest mit dem seitlich aus dem Verbindungsteil (15) herausragenden Anlagevorsprung (14) des Einhakteils (13) verbunden ist.

8. Vorrichtung nach einem der vorhergehenden Ansprüche, **dadurch gekennzeichnet,** dass das Einhakteil (13), insbesondere der im Verbindungsteil (15) liegende Hülsenabschnitt (24) desselben, mit Spiel, vorzugsweise gegenüber der Längsmittelachse der Spanneinrichtung (10) auf der Gewindespindel (16) gelagert ist.

9. Vorrichtung nach einem der vorhergehenden Ansprüche, **dadurch gekennzeichnet,** dass das Spiel des Einhakteils (13) auf der Gewindespindel (16) größer ist als das Spiel zwischen dem Einhakteil (13), insbesondere dem Außenring (31) des Einhakteils (13), und dem Verbindungsteil (15).

10. Vorrichtung nach einem der vorhergehenden Ansprüche, **dadurch gekennzeichnet,** dass der Hülsenabschnitt (24) des Einhakteils (13) eine Durchgangsbohrung (26) zum frei verschieblichen Durchtritt der Gewindespindel (16) aufweist, wobei zur Bildung des Spiels zwischen dem Hülsenabschnitt (24) des Einhakteils (13) und der Gewindespindel (16) die Durchgangsbohrung (26) sich gegebenenfalls von der Mitte aus zu den gegenüberliegenden Stirnseiten (28) vorzugsweise kegelartig erweitert.

11. Vorrichtung nach einem der vorhergehenden Ansprüche, **dadurch gekennzeichnet,** dass die kegelartigen Erweiterungen (Kegelabschnitte 29, 30) der Durchgangsbohrung (26) des Hülsenabschnitts (24) so bemessen sind, dass das Einhakteil (13) sich frei auf der Gewindespindel (16) verkippen kann.

12. Vorrichtung nach einem der vorhergehenden Ansprüche, **dadurch gekennzeichnet,** dass die Stirnseiten (28) des Hülsenabschnitts (24) des Einhakteils (13) kugelkalottenartig gewölbt sind, und/oder zu den Stirnseiten (28) des Hülsenabschnitts (24) weisende Stirnseiten (36) der Spindelmuttern (17, 18) kugelkalottenähnlich einwärts gewölbt sind, vorzugsweise korrespondierend zu den Stirnseiten (28) des Hülsenabschnitts (24).
